# EUROPÄISCHE PATENTANMELDUNG

(11) **EP 3 321 215 A1**
(43) Veröffentlichungstag der Anmeldung: **16.05.2018**
(21) Anmeldenummer: 16198344.0
(22) Anmeldetag: 11.11.2016
(51) Int. Cl.: B65F 1/16, G06Q 30/02, B65F 1/14, G06Q 50/26

(54) **SYSTEM ZUR BEREITSTELLUNG VON NACHRICHTEN FÜR EINEN BENUTZER EINES MÜLLCONTAINERS**

(71) Anmelder: emz-Hanauer GmbH & Co. KGaA, 92507 Nabburg (DE)
(72) Erfinder: HANAUER, Thomas, 92507 Nabburg (DE)
(74) Vertreter: Hannke, Christian

(57) **Zusammenfassung**

Die Erfindung betrifft ein System zur Bereitstellung von Nachrichten für einen Benutzer eines Müllcontainers umfassend einen Müllcontainer mit einer elektronischen Steuereinheit, welche eine erste Kommunikationsschnittstelle zum Senden und Empfangen von Daten aufweist und einen Server, welcher eine zweite Kommunikationsschnittstelle, einen Authentifizierungsmanager, und eine Datenbank aufweist. Dieses System zeichnet sich dadurch aus, dass vor Nutzung des Müllcontainers zwischen der ersten Kommunikationsschnittstelle und einer dritten Kommunikationsschnittstelle eines Kommunikationsgeräts ein Transfer von Identifikationsdaten initiierbar ist, wobei der Authentifizierungsmanager Benutzerdaten aus der Datenbank den Identifikationsdaten zuordnet und diese Benutzerdaten einem Informationsprovider zur Verfügung stellt, woraufhin der Informationsprovider eine Informationsnachricht für den Benutzer an das Kommunikationsgerät sendet.

## Beschreibung

Die Erfindung betrifft ein System zur Bereitstellung von Nachrichten für einen Benutzer eines Müllcontainers umfassend einen Müllcontainer mit einer elektronischen Steuereinheit, welche eine erste Kommunikationsschnittstelle zum Senden und Empfangen von Daten aufweist und einen Server, welcher eine zweite Kommunikationsschnittstelle, einen Authentifizierungsmanager, und eine Datenbank aufweist.

Zur Entsorgung von Hausmüll werden oft großräumige Müllcontainer bereitgestellt, welche von mehreren Haushalten benutzt werden. Derartige Müllcontainer können beispielsweise einer Hausgemeinschaft oder auch einer Kommune zugehörig sein. In der Regel sollen nur registrierte Benutzer einen Zugang zu solchen Müllcontainern erhalten, wobei der Zugang gesperrt werden kann beispielsweis bei Nichtzahlung der Entsorgungskosten. Ein solcher Zugang kann mittels verschiedenster elektronischer Systeme realisiert werden. Aus dem Stand der Technik ist beispielsweise bekannt, dass einem Benutzer ein Identifikationscode zugewiesen wird. Dieser Identifikationscode wird beispielsweise über einen an dem Müllcontainer angeordneten Ziffernblock eingegeben. Der entsprechende Authentifizierungsprozess wird entweder durch eine lokale Steuereinheit in dem Müllcontainer oder über einen zentralen Server, welcher mit der lokalen Steuereinheit des Müllcontainers in Verbindung steht, vorgenommen. Nach der Authentifizierung wird der Müllcontainer dann temporär geöffnet und der Benutzer kann seinen Müll entsorgen.

Darüber hinaus ist es ein Anliegen verschiedenster Stellen den Mitgliedern einer Hausgemeinschaft beziehungsweise einer Kommune Informationen verschiedenster Art, beispielsweise in Bezug auf die Müllentsorgung, zur Verfügung zu stellen. In der Regel werden solche Informationen durch Aushänge, Newsletter oder Ähnliches bereitgestellt. Solche Aushänge oder Newsletter werden jedoch oft nicht beachtet oder gehen verloren.

Aufgabe der vorliegenden Erfindung ist es demnach ein System zur Verfügung zu stellen, welches eine effektive Informationsbereitstellung für einen Benutzer eines Müllcontainers zur Verfügung stellt.

Diese Aufgabe wird gelöst durch ein System zur Bereitstellung von Nachrichten für einen Benutzer eines Müllcontainers umfassend einen Müllcontainer mit einer elektronischen Steuereinheit, welche eine erste Kommunikationsschnittstelle zum Senden und Empfangen von Daten aufweist und einen Server, welcher eine zweite Kommunikationsschnittstelle, einen Authentifizierungsmanager und eine Datenbank aufweist. Dieses System zeichnet sich dadurch aus, dass vor Nutzung des Müllcontainers zwischen der ersten Kommunikationsschnittstelle und einer dritten Kommunikationsschnittstelle eines Kommunikationsgeräts ein Transfer von Identifikationsdaten initiierbar ist, wobei der Authentifizierungsmanager Benutzerdaten aus der Datenbank den Identifikationsdaten zuordnet und diese Benutzerdaten einem Informationsprovider zur Verfügung stellt, woraufhin der Informationsprovider eine Informationsnachricht für den Benutzer an das Kommunikationsgerät sendet.

Vorzugsweise sind dabei die Identifikationsdaten über die zweite Kommunikationsschnittstelle des Servers dem Authentifizierungsmanager zuführbar. Durch das erfindungsgemäße System verwendet der Benutzer ein Kommunikationsgerät zur Authentifizierung, welches gleichzeitig für den Empfang von Informationsnachrichten ausgestaltet ist. Dem Benutzer der Mülltonne können somit Informationsnachrichten in einer einfachen, direkten und effektiven Art und Weise direkt beim Öffnen oder nach dem Öffnen zugestellt werden. Ferner muss der Benutzer sich weder einen Identifikationscode merken, noch muss ein zusätzliches elektronisches Gerät zum Öffnen der Mülltonne mitgeführt werden.

Vorzugsweise ist das Kommunikationsgerät ein portables Datenverarbeitungsgerät, mit einer Anzeigeeinrichtung wie beispielsweise ein Mobiltelefon, ein Smartphone, ein Tablet oder ein Laptop. Selbstverständlich ist die vorliegende Erfindung nicht beschränkt auf diese Aufzählung und es können auch weitere ähnliche Datenverarbeitungsgeräte für die Anwendung in Betracht gezogen werden. Die Verwendung von Mobiltelefonen beziehungsweise von Smartphones ist derart weit verbreitet, so dass die überwiegende Mehrheit der Mitglieder einer entsprechenden Hausgemeinschaft oder Kommune ein solches Smartphone besitzt. Das Kommunikationsgerät, welches üblicherweise so gut wie immer griffbereit ist, dient demnach als Mittel zur Authentifizierung für die Benutzung des Müllcontainers und gleichzeitig als Empfangsgerät für die entsprechenden Informationsnachrichten. Vorzugsweise ist auf dem Kommunikationsgerät eine Software installiert, mittels welcher der Benutzer den Transfer der Identifikationsdaten initiieren kann. Die Informationsnachrichten könnten beispielsweise in Form von Push-Benachrichtigungen auf dem Kommunikationsgerät erscheinen. Solche Push-Benachrichtigungen sind Meldungen, welche ohne das Öffnen der jeweiligen Software/App auf dem Kommunikationsgerät erscheinen.

Nach einer bevorzugten Ausführungsform erfolgt der Transfer von Identifikationsdaten zwischen der ersten und der dritten Kommunikationsschnittstelle über einen ersten Kommunikationskanal. Vorteilhafterweise nutzt der erste Kommunikationskanal eine Drahtlostechnologie. Eine besonders bevorzugte Drahtlostechnologie ist die NFC-(Nahfeldkommunikations-) Technologie oder die RFID-( radio-frequency identification)Technologie. Es wäre jedoch auch denkbar weitere Drahtlostechnologien wie Bluetooth oder Wireless-LAN zu nutzen. Bluetooth- und Wireless-LAN-Verbindungen haben jedoch im Vergleich zu NFC und RFID den Nachteil, dass die Verbindung zweier Geräte von dem Benutzer manuell herbeigeführt werden muss.

Unter einem Kommunikationskanal soll ein Übertragungsweg, in diesem Fall für die Identifikationsdaten, verstanden werden. Ein solcher Übertragungsweg verbindet einen Sender und einen Empfänger. Dieser Sender beziehungsweise Empfänger ist vorteilhafterweise Teil der jeweiligen (ersten/dritten) Kommunikationsschnittstelle. Demzufolge ist es vorteilhaft, wenn das Kommunikationsgerät und der Müllcontainer mit einem entsprechenden Sender beziehungsweise Empfänger der jeweiligen Technologie ausgestattet sind.

Die NFC-Technologie als auch die RFID-Technologie verwenden hochfrequente magnetische Wechselfelder zur Datenübertragung. Die RFID-Technologie ist in der Regel eine sogenannte "verbindungslose" Übertragung. Hierbei wird ein passiver Transponder verwendet, welcher durch das Wechselfeld eines Lesegeräts mit Energie versorgt wird. Die NFC-Technologie stellt darüber hinaus auch eine sogenannte "verbindungsbehaftete" Übertragung zur Verfügung. Bei der verbindungsbehafteten Übertragung oder auch Peer-to-Peer-Übertragung wird eine Übertragung zwischen zwei gleichwertigen Transmittern etabliert. Zwischenzeitlich ist eine Vielzahl kommerziell erhältlicher Smartphones mit einer NFC-Einrichtung ausgestattet. Die NFC-Technologie erreicht eine Datenübertragungsrate von 106 bis 424kbit/s. Die Datenübertragung basiert auf einer Amplitudenmodulation eines hochfrequenten Magnetfelds mit einer standardisierten Frequenz von 13,56 MHz. An einer Datenübertragung können lediglich zwei Teilnehmer beteiligt sein, ein sogenannter Initiator, welcher als Sender von Information fungiert und ein Empfänger, welcher diese Information empfängt.

Die NFC-Technologie stellt auch eine "verbindungslose" Übertragung analog zur RFID-Technik bereit. Eine solche Übertragung wir oft auch als passive Übertragung bezeichnet. Hier erzeugt lediglich der Initiator das hochfrequente Magnetfeld. Der Empfänger kann Daten mittels einer Lastmodulation übertragen. Dabei findet eine Energieaufnahme aus dem Magnetfeld durch einen speziell abgestimmten Schwingkreis des Empfängers statt, woraufhin der Initiator reagiert.

Bei der "verbindungsbehafteten" oder auch aktiven Übertragung erzeugt sowohl der Initiator als auch der Empfänger ein hochfrequentes Magnetfeld. Es wird zunächst ein sogenanntes "Handshake" durchgeführt, in dem eine Authentifizierung stattfindet und in dem verschiedene Einstellungen wie beispielsweise die optimale Übertragungsgeschwindigkeit ausgewählt werden. Anschließend wird der Datenaustausch durchgeführt. Aufgrund der Authentifizierung gilt diese aktive Übertrag als wesentlich sicherer im Vergleich zu der passiven Übertragung.

Nach einer weiteren bevorzugten Ausführungsform sendet die erste oder die dritte Kommunikationsschnittstelle die Identifikationsdaten über einen zweiten oder dritten Kommunikationskanal zu der zweiten Kommunikationsschnittstelle des Servers. Vorzugsweise ist der zweite und/oder der dritte Kommunikationskanal eine Mobilfunkverbindung. Bevorzugt ist die Mobilfunkverbindung eine GSM-Verbindung oder eine UMTS-Verbindung oder eine GPRS-Verbindung oder eine LTE-Verbindung. Selbstverständlich kommen auch noch weitere Verbindungen wie Funkverbindungen, beispielsweise im ISM-Band, in Betracht. Auch unter dem zweiten beziehungsweise dritten Kommunikationskanal soll ein Übertragungsweg für die Identifikationsdaten verstanden werden. Ein solcher Übertragungsweg verbindet einen Sender und einen Empfänger. In diesem Fall ist der Sender ein Teil der ersten oder dritten Kommunikationsschnittstelle und der Empfänger Teil der zweiten Kommunikationsschnittstelle des Servers.

Es wäre auch vorstellbar, dass vor/nach der Datenübertragung ein Authentifizierungsverfahren, ein Bestätigungsverfahren oder Ähnliches zur Anwendung kommt. Dann müsste die erste oder dritte Kommunikationsschnittstelle ebenfalls für den Datenempfang ausgelegt sein. Ferner müsste die zweite Kommunikationsschnittstelle zum Senden von Daten fähig sein.

Nach einer bevorzugten Ausführungsform weist der Müllcontainer eine Schleuseneinrichtung mit einer Verriegelungseinrichtung auf. Vorzugsweise authentifiziert der Authentifizierungsmanager anhand der Benutzerdaten den Benutzer. Vorteilhafterweise sendet dieser dann nach der Authentifizierung ein Freigabesignal zum Entriegeln der Verriegelungseinrichtung.

Vorteilhafterweise umfassen die von der ersten oder dritten Kommunikationsschnittstelle übertragenen Identifikationsdaten Daten zur Identifikation des Benutzers, beispielsweise ein Identifikationscode und Daten zur Identifikation des entsprechenden Müllcontainers, beispielsweise den Standort. Die zugeordneten Benutzerdaten können beispielsweise Informationen über die Zahlung der Gebühren oder Ähnliches beinhalten. Bei Nichtzahlung der Gebühren würde dann, vorteilhafterweise kein Freigabesignal gesendet werden beziehungsweise eine entsprechende Informationsnachricht dem Benutzer zugestellt werden.

Ein solches Freigabesignal wird bevorzugt zunächst zu der zweiten Kommunikationsschnittstelle übertragen. Die zweite Kommunikationsschnittstelle sendet dann über einen vierten Kommunikationskanal das Freigabesignal an die dritte Kommunikationsschnittstelle des Müllcontainers. Anschließend wird das Freigabesignal der elektronischen Steuereinheit beziehungsweise der Verriegelungseinrichtung zugeführt. Analog zum zweiten oder dritten Kommunikationskanal ist der vierte Kommunikationskanal eine Mobilfunkverbindung. Bevorzugt ist die Mobilfunkverbindung eine GSM-Verbindung oder eine UMTS-Verbindung oder eine GPRS-Verbindung oder eine LTE-Verbindung. Selbstverständlich kommen auch noch weitere Verbindungen, wie Funkverbindungen, beispielsweise im ISM-Band, in Betracht.

Die Verriegelungseinrichtung ist vorzugsweise ein elektrischer Schließmechanismus. Vorteilhafterweise können die Informationsnachrichten vor oder nach dem Entriegeln der Verriegelungseinrichtung dem Benutzer zugestellt werden. Die Schleuseneinrichtung weist bevorzugt ein begrenztes Aufnahmevolumen auf, so dass bei einem einmaligen Öffnen lediglich eine begrenzte Menge an Müll in den Container eingeworfen werden kann.

Nach einer weiteren bevorzugten Ausführungsform weist der Müllcontainer eine GPS-Einrichtung und/oder zumindest eine Sensoreinrichtung auf. Vorteilhafterweise weist der Müllcontainer eine Stromversorgung für das elektronische Steuergerät und/oder die Verriegelungseinrichtung und/oder der GPS-Einrichtung und/oder der zumindest einen Sensoreinrichtung auf.

Die entsprechenden GPS-und Sensordaten werden vorzugsweise über einen fünften Kommunikationskanal von der ersten Kommunikationsschnittstelle des Müllcontainers zu der zweiten Kommunikationsschnittstelle beziehungsweise dem Server übertragen. Auch der fünfte Kommunikationskanal ist bevorzugt eine Mobilfunkverbindung, beispielsweise eine GSM-Verbindung, eine UMTS-Verbindung, eine GPRS-Verbindung oder eine LTE-Verbindung. Selbstverständlich kommen auch in diesem Fall noch weitere Verbindungen wie Funkverbindungen, beispielsweise im ISM-Band, in Betracht.

Die Stromversorgung ist vorteilhafterweise ein Batterie. Alternativ oder kumulativ könnte auch eine Solarzelle oder Ähnliches vorgesehen sein.

Die GPS-Daten können vorteilhafterweise zur Ortsbestimmung des Müllcontainers dienen. Diese Ortsbestimmung könnte zur Identifikation des einzelnen Müllcontainers dienen. Ferner wäre der Müllcontainer aber auch bei Diebstahl oder Vandalismus leicht wiederauffindbar.

Die zumindest eine Sensoreinrichtung könnte vorteilhafterweise einen Sensor zur Überwachung der Temperatur im Innenraum des Müllcontainers aufweisen. Durch eine solche Überwachung kann das Entstehen eines Brandes in dem Container schnell detektiert und gemeldet werden.

Ferner könnte die Sensoreinrichtung einen Füllstandsensor aufweisen, wodurch rechtzeitige Leerungen gewährleistet werden.
Möglich wäre auch, dass die Sensoreinrichtung einen Bewegungssensor für Bewegungen im Innenraum des Müllcontainers aufweist. Somit könnten beispielsweise eingeschlossene Tiere detektiert werden.

Auch ein Sensor zur Detektion von Bewegungen des Müllcontainers selbst oder ein Sensor zur Detektion von Krafteinwirkungen auf den Müllcontainer könnte vorgesehen sein. Durch derartige Sensoren könnte Vandalismus erkannt und gemeldet werden.

Ferner könnte ein Gewichtssensor vorgesehen sein, welcher das Gewicht des eingeworfenen Mülls detektiert. Ein solcher Sensor könnte dazu genutzt werden, die Kostenabrechnung für den Benutzer aufgrund des Gewichts des eingeworfenen Mülls zu bemessen. Somit wäre eine "gerechte" Kostenabrechnung für die Benutzer ermöglicht.

Schließlich wäre es denkbar Sensoren bereitzustellen, welche den Einwurf bestimmter Materialien wie beispielsweise Metalle detektieren. Bei einem Restmüllcontainer könnte somit der unerlaubte Einwurf solcher Materialien detektiert werden.

Die Sensordaten der zumindest einen Sensoreinrichtung werden vorzugsweise einer Steuereinheit des Servers zugeführt, welcher die Daten auswertet und eventuell weitere Schritte, beispielsweise die Benachrichtigung entsprechend zuständiger Stellen, einleitet.

Nach einer weiteren bevorzugten Ausführungsform enthält die Informationsnachricht Informationen über den Müllcontainer und/oder den eingeworfenen Müll und/oder den nächstliegenden Müllcontainer. Derartige Informationsnachrichten können vorteilhafterweise Informationen bezüglich der GPS-Daten und/oder die Sensordaten der zumindest einen Sensoreinrichtung beinhalten. Durch derartige Informationsnachrichten bezüglich der Müllentsorgung kann eine optimale Entsorgung des Mülls beziehungsweise eine optimale Nutzung des Müllcontainers gewährleistet werden.

Beispielhafte Informationsnachrichten bezüglich der Müllentsorgung wären erlaubte einzuwerfende Materialien beziehungsweise Detektion von unerlaubten eingeworfenen Materialien. Es könnten auch das Gewicht des eingeworfenen Mülls und eventuell die dadurch anfallenden Kosten dem Benutzer des Müllcontainers mitgeteilt werden. Ferner könnten positive Rückmeldungen über das Recyclingverhalten des Benutzers (gamification) als Informationsnachrichten gesendet werden. Denkbar wären auch Informationsnachrichten über den Füllstand des Müllcontainers, die nächste Leerung des Müllcontainers oder bezüglich drohender Unzugänglichkeiten des Müllcontainers aufgrund Witterung, Überschwemmungen, etc.

Es wären Informationsnachrichten denkbar, welche den Standort des nächsten Müllcontainers, zu welchem der Benutzer einen autorisierten Zugang hat, angeben. Der Standort eines solchen Müllcontainers könnte in Form einer entsprechenden Karte, welche auf dem Kommunikationsgerät ausgegeben wird, angezeigt werden. Schließlich könnten die Informationsnachrichten auch Informationen über Öffnungszeiten des nächsten Entsorgungs- beziehungsweise Recyclinghofes beinhalten.

Die Informationsnachricht müsste jedoch nicht auf den Müllcontainer beziehungsweise die Entsorgung von Müll beschränkt sein. Demnach könnte die Informationsnachricht bevorzugt behördliche Informationen und/oder personalisierte Informationen zu Werbezwecken enthalten. Solche behördlichen Informationen könnten Informationen beinhalten, welche die Kommune betreffen wie beispielsweise Baumaßnahmen oder Ähnliches. Es könnten auch Erinnerungen für Bürgerentscheide, Abstimmungen oder Veranstaltungen durch die Informationsnachricht dem Benutzer zugestellt werden.

Schließlich könnte die Informationsnachricht personalisierte Informationen zu Werbezwecken enthalten. Personalisierte Werbung ist für viele Unternehmen sehr attraktiv, da die entsprechend abgestimmte Werbung einem bestimmten Kundenkreis zugeführt werden kann. Es kann somit viel nutzlose Werbung vermieden werden. Die dem Inhaltsprovider zugeführten Benutzerdaten können beispielsweise das Alter und/oder das Geschlecht des Benutzersbeinhalten. Diese Daten können dann entsprechende Unternehmen nutzen, um dem Benutzer auf ihn abgestimmte Werbung zukommen lassen. Ferner können die übermittelten Benutzerdaten auch den Standort des Benutzers (am Müllcontainer) enthalten. Es kann dem Benutzer somit auf den Umkreis begrenzte Werbung zugeführt werden. Solche Werbung könnte beispielsweise Informationen über eine Neueröffnung eines Geschäfts in der Umgebung oder über einen Sondervorkauf in der Nähe enthalten.

Gemäß einer weiteren bevorzugten Ausführungsform ist der Informationsprovider dem Server zugehörig oder eine externe Einrichtung. Demzufolge können die Informationsnachrichten über den Server dem Kommunikationsgerät zugeführt werden. Demzufolge umfasst der Server weiterhin einen Speicher in dem entsprechende Informationsnachrichten speicherbar sind. Alternativ oder kumulativ kann der Informationsprovider vom Server unabhängig sein. Der Server stellt dann vorteilhafterweise dem Informationsprovider die entsprechenden Benutzerdaten zur Verfügung.

Selbstverständlich wäre es auch denkbar das beschriebene System zur Bereitstellung von Nachrichten für einen Benutzer eines Wertstoffsammelbehälters wie beispielsweise Papier-, Flaschen- oder Kunststoffsammelbehälter anzuwenden.

Die Aufgabe wird auch durch ein Verfahren zur Bereitstellung von Nachrichten für Benutzer eines Müllcontainers gelöst, wobei der Müllcontainer eine elektronische Steuereinheit mit einer ersten Kommunikationsschnittstelle zum Senden und Empfangen von Daten aufweist, umfassend die Schritte:
- Initiieren eines Transfers von Identifikationsdaten zwischen einer ersten Kommunikationsschnittstelle und einem eine dritten Kommunikationsschnittstelle aufweisenden Kommunikationsgerät vor Nutzung des Müllcontainers;
- Übermitteln der Identifikationsdaten zu einem eine zweite Kommunikationsschnittstelle aufweisenden Server;
- Empfangen der Identifikationsdaten durch die zweite Kommunikationsschnittstelle und Zuführen der Identifikationsdaten zu einem Authentifizierungsmanager des Servers;
- Zuordnung von Benutzerdaten aus einer Datenbank des Servers zu den Identifikationsdaten durch den Authentifizierungsmanager;
- Bereitstellen der Benutzerdaten für einen Informationsprovider;
- Senden einer Informationsnachricht für den Benutzer an das Kommunikationsgerät durch den Informationsprovider.

Vorzugsweise ist das Verfahren zur Bereitstellung von Nachrichten verwendete Kommunikationsgerät ein portables Datenverarbeitungsgerät mit einer Anzeigeeinrichtung, beispielsweise ein Mobiltelefon, ein Smartphone, ein Tablet oder ein Laptop. Selbstverständlich ist die vorliegende Erfindung nicht beschränkt auf diese Aufzählung und es können auch weitere ähnliche Datenverarbeitungsgeräte für die Anwendung in Betracht gezogen werden.

Nach einer bevorzugten Ausführungsform erfolgt der Transfer von Identifikationsdaten zwischen der ersten und der dritten Kommunikationsschnittstelle über einen ersten Kommunikationskanal. Vorzugsweise nutzt der erste Kommunikationskanal eine Drahtlostechnologie, beispielsweise eine NFC-Technologie oder eine RFID-Technologie.

Nach einer weiteren bevorzugten Ausführungsform werden die Identifikationsdaten von der ersten oder der dritten Kommunikationsschnittstelle über einen zweiten oder dritten Kommunikationskanal zu der zweiten Kommunikationsschnittstelle des Servers gesendet. Vorteilhafterweise ist der zweite und/oder der dritte Kommunikationskanal eine Mobilfunkverbindung wie beispielsweise eine GSM-Verbindung oder eine UMTS-Verbindung oder eine GPRS-Verbindung oder eine LTE-Verbindung.

Nach einer weiteren bevorzugten Ausführungsform weist der Müllcontainer eine Schleuseneinrichtung mit einer Verriegelungseinrichtung auf. Vorteilhafterweise wird der Benutzer anhand der Benutzerdaten authentifiziert und nach der Authentifizierung ein Freigabesignal zum Entriegeln der Verriegelungseinrichtung gesendet.

Vorteilhafterweise weist der in dem Verfahren verwendete Müllcontainer eine GPS-Einrichtung und zumindest eine Sensoreinrichtung auf. Bevorzugt weist der Müllcontainer weiterhin eine Stromversorgung für das elektronische Steuergerät und/oder die Verriegelungseinrichtung und/oder der GPS-Einrichtung und/oder der zumindest einen Sensoreinrichtung auf.

Nach einer weiteren bevorzugten Ausführungsform einhält die gesendete Informationsnachricht Informationen über den Müllcontainer und/oder den eingeworfenen Müll und/oder den nächstliegenden Müllcontainer.

Alternativ oder kumulativ kann die Informationsnachricht auch behördliche Informationen und/oder personalisierte Informationen zu Werbezwecken enthalten.

Vorteilhafterweise ist der Informationsprovider dem Server zugehörig oder eine externe Einrichtung.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1: eine Übersichtsdarstellung des Systems zur Bereitstellung von Nachrichten für einen Benutzer eines Müllcontainers;
- Fig.2: eine Prinzipskizze des Systems zur Bereitstellung von Nachrichten für einen Benutzer eines Müllcontainers nach einer Ausführungsform;
- Fig.3: eine Prinzipskizze des Systems zur Bereitstellung von Nachrichten für einen Benutzer eines Müllcontainers nach einer weiteren Ausführungsform;
- Fig.4: eine Prinzipskizze des Systems zur Bereitstellung von Nachrichten für einen Benutzer eines Müllcontainers nach einer weiteren Ausführungsform;
- Fig.5: eine Prinzipskizze des Systems zur Bereitstellung von Nachrichten für einen Benutzer eines Müllcontainers nach einer weiteren Ausführungsform.

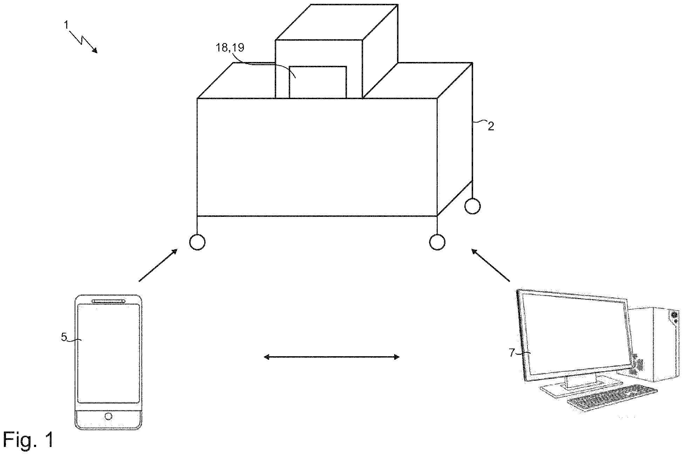

In den Figuren 1- 5 wird ein System (1) zur Bereitstellung von Nachrichten für einen Benutzer eines Müllcontainers (2) gezeigt Das System (1) umfasst einen Müllcontainer (2) mit einer elektronischen Steuereinheit (3), welche eine erste Kommunikationsschnittstelle (4) zum Senden und Empfangen von Daten aufweist und einen Server (5), welcher eine zweite Kommunikationsschnittstelle (6), einen Authentifizierungsmanager (7), und eine Datenbank (8) aufweist, wobei vor Nutzung des Müllcontainers (2) zwischen der ersten Kommunikationsschnittstelle (4) und einer dritten Kommunikationsschnittstelle (10) eines Kommunikationsgeräts (9) ein Transfer von Identifikationsdaten (11) initiierbar ist, wobei der Authentifizierungsmanager (9) Benutzerdaten (12) aus der Datenbank (10) den Identifikationsdaten (11) zuordnet und diese Benutzerdaten (12) einem Informationsprovider (13) zur Verfügung stellt, woraufhin der Informationsprovider (13) eine Informationsnachricht (14) für den Benutzer an das Kommunikationsgerät (9) sendet.

Figur 1 zeigt dabei eine Übersichtsdarstellung dieses Systems in der der Müllcontainer (2), das Kommunikationsgerät (9) in Form eine Smartphones und der Server (5) gezeigt werden.

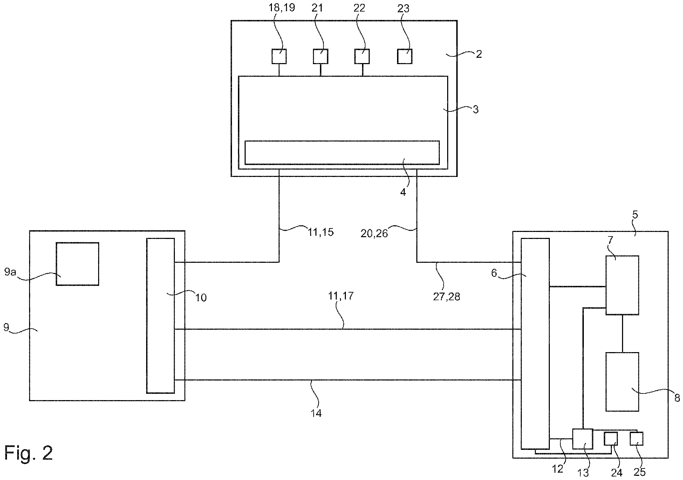

In den Figuren 2 bis 5 werden verschieden Ausführungsformen des Systems zur Bereitstellung von Informationsnachrichten für den Benutzer des Müllcontainers (2) dargestellt.
Das Kommunikationsgerät (9) ist ein portables Datenverarbeitungsgerät wie beispielsweise ein Mobiltelefon, ein Smartphone, ein Tablet oder ein Laptop und weist eine Anzeigevorrichtung (9a) auf. Ferner umfasst das Kommunikationsgerät (9) die dritte Kommunikationsschnittstelle (10). Diese dritte Kommunikationsschnittstelle (10) weist Sende- und Empfangseinrichtungen für eine Mobilfunkverbindung, beispielsweise eine GSM-Verbindung oder eine UMTS-Verbindung oder eine GPRS-Verbindung oder eine LTE-Verbindung, auf. Ferner weist die dritte Kommunikationsschnittstelle (10) weitere Sende- und/oder Empfangseinrichtungen auf, welche eine Drahtlostechnologie, beispielsweise eine NFC-Technologie nutzen. Der Müllcontainer umfasst eine Schleuseneinrichtung (18) mit einer Verriegelungseinrichtung (19). Der Müllcontainer weist weiterhin die elektronische Steuereinheit (3) mit der ersten Kommunikationsschnittstelle (4) auf. Diese erste Kommunikationsschnittstelle (4) weist Sende- und/oder Empfangseinrichtungen auf, welche eine Drahtlostechnologie, beispielsweise eine NFC-Technologie nutzen. Ferner kann die erste Kommunikationsschnittstelle (4) weitere Sende- und Empfangseinrichtungen für eine Mobilfunkverbindung wie beispielsweise eine GSM-Verbindung oder eine UMTS-Verbindung oder eine GPRS-Verbindung oder eine LTE-Verbindung aufweisen.

Der Server (5) weist den Authentifizierungsmanager (7), die Datenbank (8), den Informationsprovider (13) und die zweite Kommunikationsschnittstelle (6) auf. Diese zweite Kommunikationsschnittstelle (6) weist Sende- und Empfangseinrichtungen für eine Mobilfunkverbindung, beispielsweise eine GSM-Verbindung oder eine UMTS-Verbindung oder eine GPRS-Verbindung oder eine LTE-Verbindung, auf.

In den Ausführungsformen gemäß den Figuren 2-5 wird zwischen der ersten Kommunikationsschnittstelle (4) des Müllcontainers (2) und der dritten Kommunikationsschnittstelle (10) des Kommunikationsgeräts (9) der Transfer von Identifikationsdaten (11) über einen ersten Kommunikationskanal (15), welcher eine Drahtlostechnologie nutzt, initiiert. Vorzugsweise ist auf dem Kommunikationsgerät (9) eine Software installiert, mittels welcher der Benutzer den Transfer der Identifikationsdaten (11) initiieren kann.

Diese Identifikationsdaten (11) können sowohl Identifikationsdaten des Benutzers als auch Identifikationsdaten des Müllcontainers aufweisen.

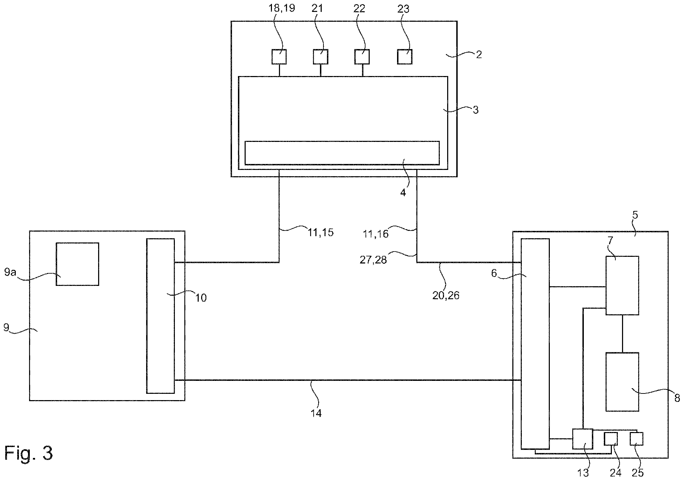

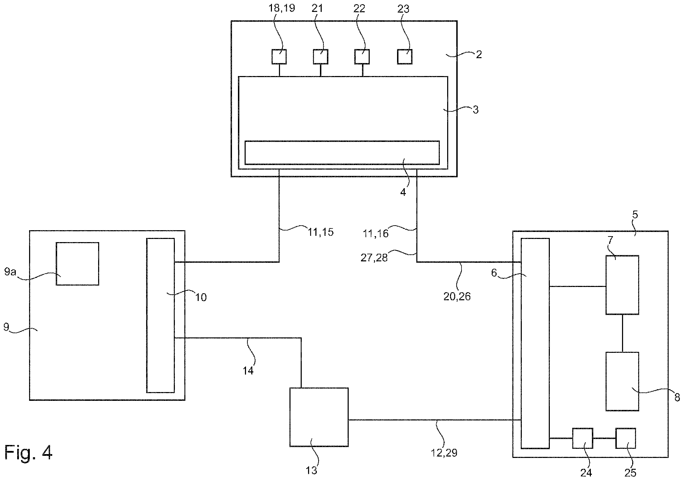

Anschließend werden diese Identifikationsdaten (11) an die zweite Kommunikationsschnittstelle (6) des Servers (5) übermittelt.
Diese Übermittlung kann mittels eines zweiten Kommunikationskanals (16) zwischen der ersten Kommunikationsschnittstelle (4) des Müllcontainers (2) und der zweiten Kommunikationsschnittstelle (6) des Servers (5) erfolgen, wie in den Figuren 3 und 4 dargestellt. Dabei ist dieser zweite Kommunikationskanal (16) eine Mobilfunkverbindung.

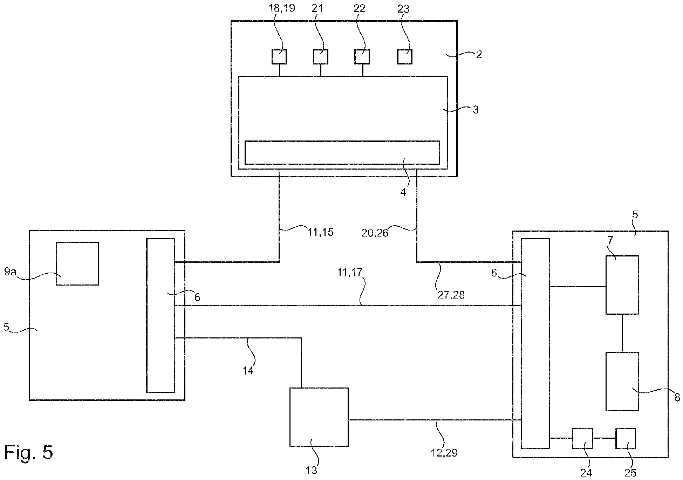

Alternativ könnte die Übermittlung der Identifikationsdaten (11) mittels eines dritten Kommunikationskanals (16) zwischen der dritten Kommunikationsschnittstelle (10) des Kommunikationsgeräts (9) und der zweiten Kommunikationsschnittstelle (6) des Servers (5) erfolgen. Dies ist in den Figuren 2 und 5 dargestellt. Dabei ist der dritte Kommunikationskanal (17) eine Mobilfunkverbindung.

Nach dem Empfang der Identifikationsdaten (11) durch die zweite Kommunikationsschnittstelle (6) des Severs (5) werden diese dem Authentifizierungsmanager (7) des Servers (5) zugeführt. Der Authentifizierungsmanager (7) ordnet dann die empfangenen Identifikationsdaten (11) Benutzerdaten (12) aus der Datenbank (10) zu.

Nach erfolgreicher Authentifikation wird ein Freigabesignal (20) zum Entriegeln der Verriegelungseinrichtung (19) an den Müllcontainer (2) übermittelt. Dies erfolgt über einen vierten Kommunikationskanal (26), welcher eine Mobilfunkverbindung zwischen der zweiten (6) und der ersten Kommunikationsschnittstelle (4) ist.

Die Benutzerdaten (12) werden weiterhin einem Informationsprovider (13) zur Verfügung gestellt. Dieser sendet eine Informationsnachricht (14) für den Benutzer an das Kommunikationsgerät (9). Die Informationsnachrichten (14) können Informationen über den Müllcontainer (2) und/oder den nächstliegenden Müllcontainer und/oder den eingeworfenen Müll und/oder behördliche Informationen und/oder personalisierte Informationen zu Werbezwecken enthalten. Die Informationsnachrichten (14) könnten beispielsweise in Form von Push-Benachrichtigungen auf dem Kommunikationsgerät (9) erscheinen. Solche Push-Benachrichtigungen sind Meldungen, welche ohne das Öffnen der jeweiligen Software/App auf dem Kommunikationsgerät (9) erscheinen.

Der Informationsprovider (13) kann als ein Element des Servers (5) vorgesehen sein oder auch eine externe Einrichtung. Für den Fall eines internen Informationsproviders (13) sind die entsprechenden Informationsnachrichten (14) in einem Speicher (25) abgelegt. Der Informationsprovider (13) wählt die entsprechenden Informationsnachrichten (14) anhand der Benutzerdaten (12) aus und gibt sie an die zweite Kommunikationsschnittstelle (6) des Servers (5) zum Versenden an das Kommunikationsgerät (9) weiter.

Im Falle eines externen Informationsproviders (13) werden die Benutzerdaten (12) von der zweiten Kommunikationsschnittstelle (6) des Servers (5) über einen sechsten Kommunikationskanal (29), welcher vorzugsweise eine Mobilfunkverbindung oder Ähnliches ist, dem externen Informationsproviders (13) bereitgestellt.

Optional kann der Müllcontainer (2) mit einer GPS-Einrichtung (21) zur Ortsbestimmung und zumindest einer Sensoreinrichtung (22) ausgestattet sein. Die Sensoreinrichtung (22) kann Sensoren zur Überwachung der Temperatur im Innenraum des Müllcontainers (2), zur Detektion von Bewegungen im Innenraum des Müllcontainers (2), zur Detektion von Bewegungen des Müllcontainers (2) selbst, zur Anzeige des Füllstands, zur Bestimmung des Gewichts des eingeworfenen Mülls oder zur Detektion bestimmter Materialein in dem eingeworfenen Müll.

Diese GPS-/ Sensordaten (27) werden vorzugsweise über einen fünften Kommunikationskanal (28) von der ersten Kommunikationsschnittstelle (4) des Müllcontainers (2) zu der zweiten Kommunikationsschnittstelle (6) beziehungsweise dem Server (5) übertragen. Auch der fünfte Kommunikationskanal (28) ist bevorzugt eine Mobilfunkverbindung, beispielsweise eine GSM-Verbindung, eine UMTS-Verbindung, eine GPRS-Verbindung oder eine LTE-Verbindung.

Die durch die zweite Kommunikationsschnittstelle (6) empfangenen GPS-/ Sensordaten (27) werden vorzugsweise einer Steuereinheit (24) des Servers zugeführt, welcher die Daten auswertet und eventuell weitere Schritte, beispielsweise die Benachrichtigung entsprechend zuständiger Stellen, einleitet. Entsprechende Kontaktdaten können in dem Speicher (25) abgelegt sein.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: System
- 2: Müllcontainer
- 3: elektronische Steuereinheit
- 4: erste Kommunikationsschnittstelle
- 5: Server
- 6: zweite Kommunikationsschnittstelle
- 7: Authentifizierungsmanager
- 8: Datenbank
- 9: Kommunikationsgerät
- 9a: Anzeigeeinrichtung
- 10: dritte Kommunikationsschnittstelle
- 11: Identifikationsdaten
- 12: Benutzerdaten
- 13: Informationsprovider
- 14: eine Informationsnachricht
- 15: erster Kommunikationskanal
- 16: zweiter Kommunikationskanal
- 17: dritter Kommunikationskanal
- 18: Schleuseneinrichtung
- 19: Verriegelungseinrichtung
- 20: Freigabesignal
- 21: GPS-Einrichtung
- 22: Sensoreinrichtung
- 23: Stromversorgung
- 24: Steuereinheit des Servers
- 25: Speicher
- 26: vierter Kommunikationskanal
- 27: GPS-/Sensordaten
- 28: fünfter Kommunikationskanal
- 29: sechster Kommunikationskanal

## Patentansprüche

1. System (1) zur Bereitstellung von Nachrichten für einen Benutzer eines Müllcontainers (2) umfassend einen Müllcontainer (2) mit einer elektronischen Steuereinheit (3), welche eine erste Kommunikationsschnittstelle (4) zum Senden und Empfangen von Daten aufweist und einen Server (5), welcher eine zweite Kommunikationsschnittstelle (6), einen Authentifizierungsmanager (7), und eine Datenbank (8) aufweist,
**dadurch gekennzeichnet, dass**
vor Nutzung des Müllcontainers (2) zwischen der ersten Kommunikationsschnittstelle (4) und einer dritten Kommunikationsschnittstelle (10) eines Kommunikationsgeräts (9) ein Transfer von Identifikationsdaten (11) initiierbar ist, wobei der Authentifizierungsmanager (7) Benutzerdaten (12) aus der Datenbank (8) den Identifikationsdaten (11) zuordnet und diese Benutzerdaten (12) einem Informationsprovider (13) zur Verfügung stellt, woraufhin der Informationsprovider (13) eine Informationsnachricht (14) für den Benutzer an das Kommunikationsgerät (9) sendet.

2. System nach Anspruch 1,
**dadurch gekennzeichnet, dass**
das Kommunikationsgerät (9) ein portables Datenverarbeitungsgerät mit einer Anzeigeeinrichtung (9a), beispielsweise ein Mobiltelefon, ein Smartphone, ein Tablet oder ein Laptop ist.

3. System nach einem der Ansprüche 1 oder 2,
**dadurch gekennzeichnet, dass**
der Transfer von Identifikationsdaten (11) zwischen der ersten (4) und der dritten Kommunikationsschnittstelle (10) über einen ersten Kommunikationskanal (15) erfolgt, wobei der erste Kommunikationskanal (15) eine Drahtlostechnologie nutzt, wobei die Drahtlostechnologie beispielsweise eine NFC-Technologie oder eine RFID-Technologie ist.

4. System nach einem der vorhergehenden Ansprüche,
**dadurch gekennzeichnet, dass**
die erste (4) oder die dritte Kommunikationsschnittstelle (10) die Identifikationsdaten (11) über einen zweiten (16) oder dritten Kommunikationskanal (17) zu der zweiten Kommunikationsschnittstelle (6) des Servers (5) sendet, wobei der zweite (16) und/oder der dritte Kommunikationskanal (17) eine Mobilfunkverbindung ist, wobei die Mobilfunkverbindung beispielsweise eine GSM-Verbindung oder eine UMTS-Verbindung oder eine GPRS-Verbindung oder eine LTE-Verbindung ist.

5. System nach einem der vorhergehenden Ansprüche,
**dadurch gekennzeichnet, dass**
der Müllcontainer (2) eine Schleuseneinrichtung (18) mit einer Verriegelungseinrichtung (19) aufweist, wobei der Authentifizierungsmanager (7) anhand der Benutzerdaten (12) den Benutzer authentifiziert und nach der Authentifizierung ein Freigabesignal (20) zum Entriegeln der Verriegelungseinrichtung (19) sendet.

6. System nach einem der vorhergehenden Ansprüche,
**dadurch gekennzeichnet, dass**
der Müllcontainer (2) eine GPS-Einrichtung (21) und/oder zumindest eine Sensoreinrichtung (22) aufweist, wobei der Müllcontainer (2) eine Stromversorgung (23) für das elektronische Steuergerät (3) und/oder die Verriegelungseinrichtung (19) und/oder der GPS-Einrichtung (21) und/oder der zumindest einen Sensoreinrichtung (22) aufweist.

7. System nach einem der vorhergehenden Ansprüche,
**dadurch gekennzeichnet, dass**
Informationsnachricht (14) Informationen über den Müllcontainer (2) und/oder den eingeworfenen Müll und/oder den nächstliegenden Müllcontainer.

8. System nach einem der vorhergehenden Ansprüche,
**dadurch gekennzeichnet, dass**
Informationsnachricht (14) behördliche Informationen und/oder personalisierte Informationen zu Werbezwecken enthält.

9. System nach einem der vorhergehenden Ansprüche,
**dadurch gekennzeichnet, dass**
der Informationsprovider (13) dem Server (5) zugehörig ist oder eine externe Einrichtung ist.

10. Verfahren zur Bereitstellung von Nachrichten für Benutzer eines Müllcontainers (2) wobei der Müllcontainer (2) eine elektronischen Steuereinheit (3) mit einer ersten Kommunikationsschnittstelle (4) zum Senden und Empfangen von Daten aufweist umfassend die Schritte:
- Initiieren eines Transfers von Identifikationsdaten (11) zwischen einer ersten Kommunikationsschnittstelle (4) und einem eine dritten Kommunikationsschnittstelle (10) aufweisenden Kommunikationsgerät (9) vor Nutzung des Müllcontainers (2);
- Übermitteln der Identifikationsdaten (11) zu einem eine zweite Kommunikationsschnittstelle (6) aufweisenden Server (5);
- Empfangen der Identifikationsdaten (11) durch die zweite Kommunikationsschnittstelle (6) und zuführen der Identifikationsdaten (11) zu einem Authentifizierungsmanager (9) des Servers (5)
- Zuordnung von Benutzerdaten (12) aus einer Datenbank (8) des Servers (5) zu den Identifikationsdaten (11) durch den Authentifizierungsmanager (9);
- Bereitstellen der Benutzerdaten (12) für einen Informationsprovider (13);
- Senden Informationsnachricht (14) für den Benutzer an das Kommunikationsgerät (5) durch den Informationsprovider (13).

## Geänderte Patentansprüche

### Geänderte Patentansprüche gemäss Regel 137(2) EPÜ.

1. System (1) zur Bereitstellung von Nachrichten für einen Benutzer eines Müllcontainers (2) umfassend einen Müllcontainer (2) mit einer elektronischen Steuereinheit (3), welche eine erste Kommunikationsschnittstelle (4) zum Senden und Empfangen von Daten aufweist und einen Server (5), welcher eine zweite Kommunikationsschnittstelle (6), einen Authentifizierungsmanager (7), und eine Datenbank (8) aufweist,
**dadurch gekennzeichnet, dass**
vor Nutzung des Müllcontainers (2) zwischen der ersten Kommunikationsschnittstelle (4) und einer dritten Kommunikationsschnittstelle (10) eines Kommunikationsgeräts (9) ein Transfer von Identifikationsdaten (11) initiierbar ist, wobei der Authentifizierungsmanager (7) Benutzerdaten (12) aus der Datenbank (8) den Identifikationsdaten (11) zuordnet und diese Benutzerdaten (12) einem Informationsprovider (13) zur Verfügung stellt, woraufhin der Informationsprovider (13) eine Informationsnachricht (14) für den Benutzer beim Öffnen oder nach dem Öffnen des Müllcontainers an das Kommunikationsgerät (9) sendet, wobei die Informationsnachricht (14) in Form von einer Push-Benachrichtigung auf dem Kommunikationsgerät (9) erscheint.

2. System nach Anspruch 1,
**dadurch gekennzeichnet, dass**
das Kommunikationsgerät (9) ein portables Datenverarbeitungsgerät mit einer Anzeigeeinrichtung (9a), beispielsweise ein Mobiltelefon, ein Smartphone, ein Tablet oder ein Laptop ist.

3. System nach einem der Ansprüche 1 oder 2,
**dadurch gekennzeichnet, dass**
der Transfer von Identifikationsdaten (11) zwischen der ersten (4) und der dritten Kommunikationsschnittstelle (10) über einen ersten Kommunikationskanal (15) erfolgt, wobei der erste Kommunikationskanal (15) eine Drahtlostechnologie nutzt, wobei die Drahtlostechnologie beispielsweise eine NFC-Technologie oder eine RFID-Technologie ist.

4. System nach einem der vorhergehenden Ansprüche,
**dadurch gekennzeichnet, dass**
die erste (4) oder die dritte Kommunikationsschnittstelle (10) die Identifikationsdaten (11) über einen zweiten (16) oder dritten Kommunikationskanal (17) zu der zweiten Kommunikationsschnittstelle (6) des Servers (5) sendet, wobei der zweite (16) und/oder der dritte Kommunikationskanal (17) eine Mobilfunkverbindung ist, wobei die Mobilfunkverbindung beispielsweise eine GSM-Verbindung oder eine UMTS-Verbindung oder eine GPRS-Verbindung oder eine LTE-Verbindung ist.

5. System nach einem der vorhergehenden Ansprüche,
**dadurch gekennzeichnet, dass**
der Müllcontainer (2) eine Schleuseneinrichtung (18) mit einer Verriegelungseinrichtung (19) aufweist, wobei der Authentifizierungsmanager (7) anhand der Benutzerdaten (12) den Benutzer authentifiziert und nach der Authentifizierung ein Freigabesignal (20) zum Entriegeln der Verriegelungseinrichtung (19) sendet.

6. System nach einem der vorhergehenden Ansprüche,
**dadurch gekennzeichnet, dass**
der Müllcontainer (2) eine GPS-Einrichtung (21) und/oder zumindest eine Sensoreinrichtung (22) aufweist, wobei der Müllcontainer (2) eine Stromversorgung (23) für das elektronische Steuergerät (3) und/oder die Verriegelungseinrichtung (19) und/oder der GPS-Einrichtung (21) und/oder der zumindest einen Sensoreinrichtung (22) aufweist.

7. System nach einem der vorhergehenden Ansprüche,
**dadurch gekennzeichnet, dass**
Informationsnachricht (14) Informationen über den Müllcontainer (2) und/oder den eingeworfenen Müll und/oder den nächstliegenden Müllcontainer.

8. System nach einem der vorhergehenden Ansprüche,
**dadurch gekennzeichnet, dass**
Informationsnachricht (14) behördliche Informationen und/oder personalisierte Informationen zu Werbezwecken enthält.

9. System nach einem der vorhergehenden Ansprüche,
**dadurch gekennzeichnet, dass**
der Informationsprovider (13) dem Server (5) zugehörig ist oder eine externe Einrichtung ist.

10. Verfahren zur Bereitstellung von Nachrichten für Benutzer eines Müllcontainers (2) wobei der Müllcontainer (2) eine elektronischen Steuereinheit (3) mit einer ersten Kommunikationsschnittstelle (4) zum Senden und Empfangen von Daten aufweist umfassend die Schritte:
- Initiieren eines Transfers von Identifikationsdaten (11) zwischen einer ersten Kommunikationsschnittstelle (4) und einem eine dritten Kommunikationsschnittstelle (10) aufweisenden Kommunikationsgerät (9) vor Nutzung des Müllcontainers (2);
- Übermitteln der Identifikationsdaten (11) zu einem eine zweite Kommunikationsschnittstelle (6) aufweisenden Server (5);
- Empfangen der Identifikationsdaten (11) durch die zweite Kommunikationsschnittstelle (6) und zuführen der Identifikationsdaten (11) zu einem Authentifizierungsmanager (9) des Servers (5)
- Zuordnung von Benutzerdaten (12) aus einer Datenbank (8) des Servers (5) zu den Identifikationsdaten (11) durch den Authentifizierungsmanager (9);
- Bereitstellen der Benutzerdaten (12) für einen Informationsprovider (13);
- Senden einer Informationsnachricht (14) für den Benutzer beim Öffnen oder nach dem Öffnen des Müllcontainers an das Kommunikationsgerät (5) durch den Informationsprovider (13), wobei die Informationsnachricht (14) in Form von einer Push-Benachrichtigung auf dem Kommunikationsgerät (9) erscheint.
